Europäisches Patentamt

European Patent Office

Office européen des brevets

(19)

(11) Veröffentlichungsnummer : **0 160 217**
**B1**

(12) **EUROPÄISCHE PATENTSCHRIFT**

(45) Veröffentlichungstag der Patentschrift :
27.07.88

(51) Int. Cl.⁴ : **B 23 C   3/00**

(21) Anmeldenummer : **85103681.4**

(22) Anmeldetag : **27.03.85**

(54) **Fräsaggregat.**

(30) Priorität : **04.04.84 DE 3412576**

(43) Veröffentlichungstag der Anmeldung :
**06.11.85 Patentblatt 85/45**

(45) Bekanntmachung des Hinweises auf die Patenterteilung : **27.07.88 Patentblatt 88/30**

(84) Benannte Vertragsstaaten :
**AT BE CH DE FR GB IT LI LU NL SE**

(56) Entgegenhaltungen :
**DE-A- 1 627 096**
**DE-A- 2 045 244**
**DE-A- 3 008 521**
**DE-C-   320 928**

(73) Patentinhaber : **Eugen Lutz GmbH & Co. Maschinenfabrik**
**Pinacher Strasse**
**D-7130 Mühlacker-Lomersheim (DE)**

(72) Erfinder : **Bergler, Otto**
**Jahnstrasse 18/1**
**D-7130 Mühlacker-Lomersheim (DE)**

(74) Vertreter : **Wilhelm, Hans-Herbert, Dr.-Ing. et al**
**Wilhelm & Dauster Patentanwälte Hospitalstrasse 8**
**D-7000 Stuttgart 1 (DE)**

**Beschreibung**

Die Erfindung betrifft eine Fräsvorrichtung nach den Oberbegriff des Patentanspruches 1.

Es ist bekannt, zur Bearbeitung von Fenster- oder Türprofilen aus Metall sogenannte Bohr-Frässpindeln vorzusehen, die an ihrer Spitze in der Art eines Bohrwerkzeuges mit einem für den Bohrvorgang ausgelegten Bereich und anschlie-. ßend daran einen für das Fräsen geeigneten Bearbeitungsbereich aufweisen. Es ist mit solchen Werkzeugen und mit den dafür ausgelegten Fräsaggregaten (DE-A 2 045 244) daher möglich, beispielsweise Metallrahmen von einer Seite her anzubohren und ausgehend von dieser Bohrung dann Längsschlitze o. dgl., wie sie zum Einarbeiten von Drücker und Schlüsselloch oder zum Einarbeiten der Schloßkastenöffnung benötigt werden zu fräsen. Bekannt ist auch, daß die Profiltiefe solcher Fenster- oder Türrahmen aus wärmetechnischen Gründen immer größer gewählt wird, damit der in der Regel ausgeschäumte Hohlraum in den Metallprofilen für eine bessere Wärmeisolierung sorgt. Mit wachsender Tiefe der Profile, die mehrere Kammern enthalten, wird aber der eingangs erwähnte Arbeitsvorgang mit sogenannten Bohr-Frässpindeln erschwert, weil diese beim Bearbeitungsvorgang zu Schwingungen, damit zu ungenauer Bearbeitung und sogar zum Bruch, neigen können.

Es sind zwar Fräsmaschinen (DE-A 3 008 521) bekannt geworden, die auf einer Kreuzschlitteneinheit beidseitig vom Hohlkammerprofil zwei fluchtende Fräswerkzeuge angeordnet haben, die von einer Antriebseinheit betrieben werden. Damit kann dann wahlweise von beiden Seiten des Hohlkammerprofils eingetaucht und gefräst werden, jeweils mit einem Tiefen- und einem Kopierhandhebel.

Diese bekannten Ausführungen von Fräsmaschinen haben jedoch den Nachteil, daß sie sehr aufwendig sind, zudem können die Schwingungen beim Fräsvorgang in den mittleren Kammern des Hohlprofils trotzdem nicht vermieden werden. Weiterhin ist ein kontinuierliches Durchstechen bzw. Durchbohren des Profils nicht möglich, weil von zwei Seiten getrennt gearbeitet werden muß und dies nicht nur beim Bohren, sondern auch beim Fräsen.

Bekannt ist auch eine Fräsvorrichtung (DE-C-320 928), bei der dem Fraswerkzeug ein zweites Lager am freien Ende zugeordnet ist, das über einen U-förmigen Tragbügel fest mit einem Kreuzschlittensystem verbunden ist, das das Fräswerkzeug führt. Mit einer solchen Einrichtung können aber keine Bohrvorgänge durchgeführt werden.

Der Erfindung liegt daher die Aufgabe zugrunde, eine Fräsvorrichtung der eingangs genannten Art so auszubilden, daß nach dem Bohren der Fräsvorgang auch über größere Bearbeitungsbreiten erfolgen kann, ohne daß nachteilige Folgen zu erwarten sind.

Zur Lösung dieser Aufgabe werden bei einer Fräsvorrichtung der eingangs genannten Art die kennzeichnenden Merkmale des Patentanspruches 1 vorgesehen.

Durch diese Ausgestaltung wird das Bohr-Fräswerkzeug nach dem Bohrvorgang zu einer beidseitig gelagerten Fräswelle, mit der auch größere Bearbeitungsbreiten und damit größere Profiltiefen ohne Schwierigkeiten gefräst werden können. Das Bohr-Fräswerkzeug kann in besonders vorteilhafter Weise zur Führung in dem Gegenlager an der Spitze einen Bereich mit Umfangsflächen aufweisen, die Teile einer in den Innenring des Wälzlagers des Gegenlagers passenden Zylindermantelfläche sind. Die bisher bekannten Bohr-Fräswerkzeug sind an ihrer Spitze bisher mit starken Hinterschneidungen hinter der Schneide ausgestattet gewesen. Eine Führung in einem Wälzlager wäre damit nicht oder nur sehr schlecht möglich gewesen. Durch die besondere Ausbildung des Bohr-Fräswerkzeug wird ein sicherer Halt der Fräswerkzeugspitze im Gegenlager erreicht, der eine ruhige Bearbeitung beim Fräsen gewährleistet.

Das Führungsteil für das Gegenlager kann in einfacher Weise als Gleitplatte ausgebildet sein, die an einer parallel zu der Werkstückanschlagsfläche und senkrecht zur Frässpindelachse verlaufenden Führungsfläche anliegt, die Teil des Maschinengestells ist. Dabei kann die Gleitplatte in einfacher Weise senkrecht zu der Führungsfläche durch eine Führung gehalten sein, die zwischen dem Werkstückauflagetisch und der senkrechten Werkstückanschlagfläche liegt. Die Führungsfläche kann mit Wälzkörpern zur reibungsarmen Anlage der Gleitplatte versehen sein. Um bei einer solchen Ausgestaltung die Gleitplatte in Richtung der Führungsfläche zu halten, die in der Regel bei waagrechtem Fräswerkzeug senkrecht verläuft, wird die Gleitplatte mit einem Mitnahmebolzen versehen, der von ihr senkrecht abragt und axial verschiebbar in eine Führung des Kreuzschlittens eingreift. Durch diese Ausgestaltung ist eine Bewegung des Kreuzschlittens in der Achsrichtung des Fräswerkzeuges relativ zu der Gleitplatte und dem Gegenlager möglich. Die Länge des Mitnahmebolzens wird dabei auf die Länge der Bohr-Fräswerkzeuge abgestimmt, so daß der Mitnahmebolzen ständig im Eingriff in der Führungsbüchse des Kreuzschlittens verbleibt, auch wenn das Bohr-Fräswerkzeug ganz aus dem Werkstück zurückgezogen ist. Natürlich ist es auch möglich, den Mitnahmebolzen dann aus seiner Führungsbüchse austreten zu lassen, wenn auch das Bohr-Fräswerkzeug das Werkstück verlassen hat. Es müssen dann aber geeignete Klemmeinrichtungen oder andere Führungen für die Gleitplatte vorgesehen sein.

Vorteilhaft ist es schließlich auch noch, wenn dem Führungsteil für das Gegenlager oder dem Support ein Kopierstift zugeordnet wird, der mit der Kopierschablone zusammenwirkt. Dabei wird vorgesehen, diesen Kopierstift mindestens in dem Bereich mit einem größeren Durchmesser zu versehen, der durch die Kopierschablone geführt wird, solange der anfängliche Bohrvorgang vorgenommen wird. Dadurch können Ungenauigkeiten beim Bohrvorgang vermieden werden. Erst beim Fräsen liegt der Kopierstift an der Aussparung der Kopierschablone mit einem, vorzugsweise dem Durchmesser des Bohr-Fräswerkzeuges entsprechenden Durchmesser an.

Die Erfindung ist in der Zeichnung anhand eines Ausführungsbeispiels dargestellt und in der nachfolgenden Beschreibung erläutert. Es zeigen :

Fig. 1 eine schematische Teilseitenansicht einer erfindungsgemäßen Fräseinrichtung mit einem an einem Kreuzschlitten angeordneten Bohr-Fräswerkzeug,

Fig. 2 eine vergrößerte Darstellung des in Fig. 1 eingesetzten Bohr-Fräswerkzeuges,

Fig. 3 den Schnitt durch das Bohr-Fräswerkzeug der Fig. 2 längs der Linie III-III,

Fig. 4 die Ansicht des Bohr-Fräswerkzeuges der Fig. 2 in Richtung des Pfeiles IV,

Fig. 5 die vergrößerte Darstellung eines Teiles der Fräseinrichtung der Fig. 1 mit den für die Erfindung wichtigen Teilen,

Fig. 6 einen Teil einer Fräseinrichtung ähnlich Fig. 5, jedoch in einer etwas abgewandelten Ausführung und mit einem anders gestalteten Kopierstift,

Fig. 7 die vergrößerte Darstellung eines Teiles der Fräseinrichtung und des Kopierstiftes der Fig. 6 während des ersten Arbeitsschrittes beim Bohren des Werkstückes,

Fig. 8 die Darstellung gemäß Fig. 7 jedoch während des nachfolgenden Fräsvorganges,

Fig. 9 eine andere Ausführungsform für einen Kopierstift,

Fig. 10 eine Teilschnittdarstellung ähnlich der Fig. 6, jedoch in einer weiteren Ausführung der Fräseinrichtung,

Fig. 11 den Schnitt durch die Fräseinrichtung der Fig. 10 längs der Linie XI-XI und

Fig. 12 die Draufsicht auf die Einrichtung der Fig. 11.

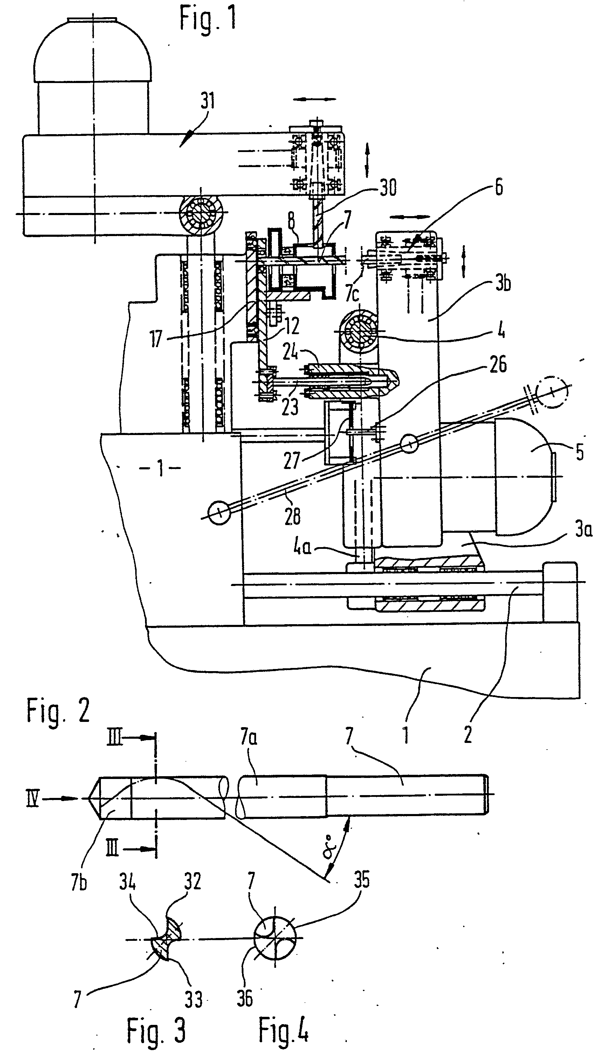

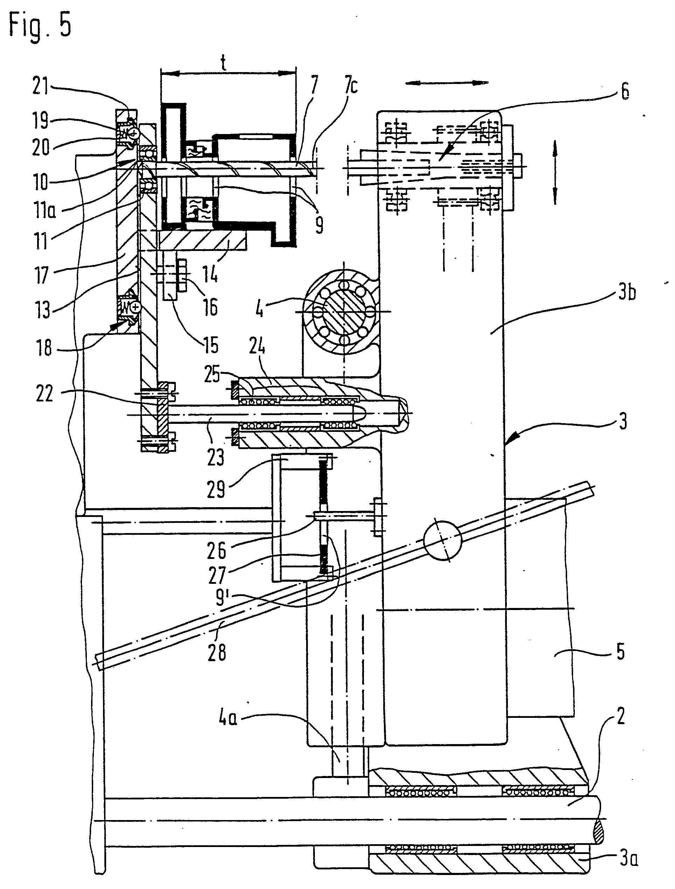

In den Fig. 1 und 5 ist ein Maschinengestell 1 mit Führungsschienen 2 in horizontaler Richtung versehen, auf denen ein Kreuzschlitten 3 bestehend aus den Führungsteilen 3a und 3b horizontal verschiebbar geführt ist. Der auf den Schienen 2 verschiebbare Teil 3a trägt über nach oben ragende Rahmenteile ebenfalls horizontal verlaufende Führungsstangen 4, deren Achsrichtung aber senkrecht zum Verlauf der Achse der Führungsschienen 2 liegt. Auf diesen Führungsstangen 4 ist der Teil 3b des Kreuzschlittens verschiebbar gelagert, so daß der Teil 3b sowohl in Richtung der Achse der Führungsschiene 2 als auch senkrecht dazu verschiebbar ist.

An dem Teil 3b ist einmal ein Antriebsmotor 5 angebracht, der in nicht näher dargestellter Weise, beispielsweise über einen Zahnriementrieb, einen Aufnahmekopf 6 für ein Bohr-Fräswerkzeug 7 antreibt, das in bekannter Weise fest in den Aufnahmekopf 6 eingesetzt ist. Das Bohr-Fräswerkzeug 7 durchsetzt im Ausführungsbeispiel ein Hohlprofil 8, das beispielsweise Teil eines Fenster- oder Türprofiles ist, in das Drücker oder Schlüssellöcher oder eine Schloßkastenöffnung 9 durch die gesamte Tiefe t des Profiles 8 hindurch eingearbeitet werden soll. In der in den Fig. 1 und 5 dargestellten Lage wird die Spitze des Bohr-Fräswerkzeuges 7 von einem Gegenlager 10 radial geführt, das ein Kugellager 11 besitzt, dessen Innenring 11a dem Außendurchmesser der Spitze des Bohr-Fräswerkzeuges 7 entspricht. Dieses Gegenlager 10 sitzt fest in einer Gleitplatte 12, die zwischen einer senkrecht stehenden, ortsfest im Maschinengestell 1 angeordneten Bezugswand 13 und einer Werkstückauflage 14 verläuft und durch in ortsfeste Laschen 15 eingeschraubte Stellschraubstifte 16 o. dgl., die auf die von der Bezugsfläche 13 abgewandte Seite der Gleitplatte 12 drücken, fest gegen diese Bezugsfläche 13 gedrückt wird. In die die Bezugsfläche 13 enthaltene Andrückplatte 17 sind Kugeltraglager 18 eingesetzt, die aus Kugeln 19, Andrückfedern 20 und Halteringen 21 bestehen und dafür sorgen, daß ein Teil der Oberfläche der Kugeln 19 jeweils über die Bezugsfläche 13 vorsteht, so daß die Gleitplatte 12 mit geringer Rollreibung an der Platte 17 geführt ist.

Die Gleitplatte 12 weist an ihrem unteren Ende einen über einen Flansch 22 angeschraubten Mitnahmebolzen 23 auf, der senkrecht von der Gleitplatte 12 absteht und in eine Führungsbüchse 24 des Teiles 3b des Kreuzschlittens 3 eingreift, die in ihrem Inneren mit Kugellagern 25 zur reibungsarmen Führung des Mitnehmerbolzens 23 versehen ist. Beim Ausführungsbeispiel ist diese Büchse 24 Teil des Kreuzschlittens 3 bzw. seines Teiles 3b. An dem Teil 3b des Kreuzschlittens 3 ist außerdem noch ein Taststift 26 befestigt, der in an sich bekannter Weise in eine Schablone 27 hereingreift, die daher den von dem Bohr-Fräswerkzeug 7 auszufräsenden Bereich im Profil 8 vorher bestimmt, wenn der Kreuzschlitten 3 in Richtung der Achse der Führungsstange 4 oder in senkrechter Richtung dazu, in Richtung der ebenfalls noch zum Kreuzschlitten 3 gehörenden senkrechten Führungsstangen 4a, bewegt wird. Der Kreuzschlitten 3 besitzt hierzu einen von Hand zu bewegenden Kopierhebel 28. Die Schablone 27 ist in bekannter Weise ortsfest in einer Halterung 29 angeordnet.

Bei der Fräseinrichtung der Fig. 1 ist außerdem noch eine zweite Bearbeitungsspindel 30 ebenfalls an einem Kreuzschlitten 31 vorgesehen. Mit ihrer Hilfe kann ein zusätzlicher Bearbeitungsvorgang durchgeführt werden. Hierauf braucht aber nicht eingegangen zu werden.

Wie aus den Fig. 2 bis 4 erkennbar ist, ist das Bohr-Fräswerkzeug 7 in seinem Bereich 7a in bekannter Weise als eine Art Fräswelle ausgebildet, die es erlaubt, Umfangszerspanungen vorzunehmen. Fig. 3 zeigt das für den Zerspanungsvorgang vorgesehene Fräsprofil mit zwei Schneiden 32 und 33, von denen aus das Profil hinterschnitten ist. Die Spanabfuhr erfolgt durch die Hohlkehlen 34. An der Spitze weist das Bohr-Fräswerkzeug 7 jedoch einen Bereich 7b auf, der gemäß Fig. 4 Umfangsbereiche 35 und 36 besitzt, die Teile einer Zylindermantelfläche sind. In diesen Bereichen liegt das Bohr-Fräswerkzeug 7 sicher und fest am Innenring 11a des Kugellagers 11 an. Es wird daher in der Stellung der Fig. 5 — bzw. Fig. 1 — beidseitig sicher radial geführt. Die Bearbeitung von Profilen 8 mit großer Tiefe t ist daher ohne weiteres möglich.

Der Bearbeitungsvorgang geht wie folgt vor sich. Ehe das Bohr-Fräswerkzeug 7 die in den Fig. 1 und 5 gezeigte Endstellung einnimmt, ist der Kreuzschlitten 3 nach rechts zurückgezogen, so daß das Bohr-Fräswerkzeug 7 das Profil 8 noch nicht mit seiner Spitze erreicht hat. Analog befindet sich der Mitnahmebolzen 23, der in Richtung der Achse 7c des Bohr-Fräswerkzeuges 7 fest an der Gleitplatte 12 und am Maschinengestell gehalten ist, ebenfalls noch nicht im Eingriff mit der Büchse 24. Seine Lage korrespondiert aber mit der Lage der Büchse 24, so daß seine Achse mit der Achse der Büchse 24 fluchtet. Das Bohr-Fräswerkzeug 7 fluchtet dann mit der Achse des Kugellagers 11.

Der Kreuzschlitten 3 kann dann auf das Werkstück 8 zugestellt werden. Das Bohr-Fräswerkzeug 7 dringt mit seiner Spitze in das noch unbearbeitete Werkstück 8 ein. Es wirkt als Bohrer und durchdringt das Profil 8, bis sein vorderer Bereich 7b in den Innenring 11a des Gegenlagers 10 hereingeführt ist. Vorher schon ist der Mitnehmerbolzen 23 in die Büchse 24 eingedrungen, so daß dann, wenn das Bohr-Fräswerkzeug 7 die in der Fig. 5 und 1 gezeigte Endlage eingenommen hat und nun an beiden Enden radial geführt ist, der Kreuzschlitten 3b senkrecht zu der Richtung der Achse 7c fest mit der Gleitplatte 12 und dem Gegenlager 10 verbunden ist. Setzt in diesem Zeitpunkt daher der Kopiervorgang des Kreuzschlittenteils 3b ein, so fräst der Bereich 7a des Bohr-Fräswerkzeuges 7 die Öffnungen 9 analog der Öffnung 9' in der Kopierschablone 27 aus. Während dieses Fräsvorganges ist des Bohr-Fräswerkzeug 7 an beiden Enden gehalten. Eine einwandfreie Bearbeitung, auch bei großer Profiltiefe t, ist möglich.

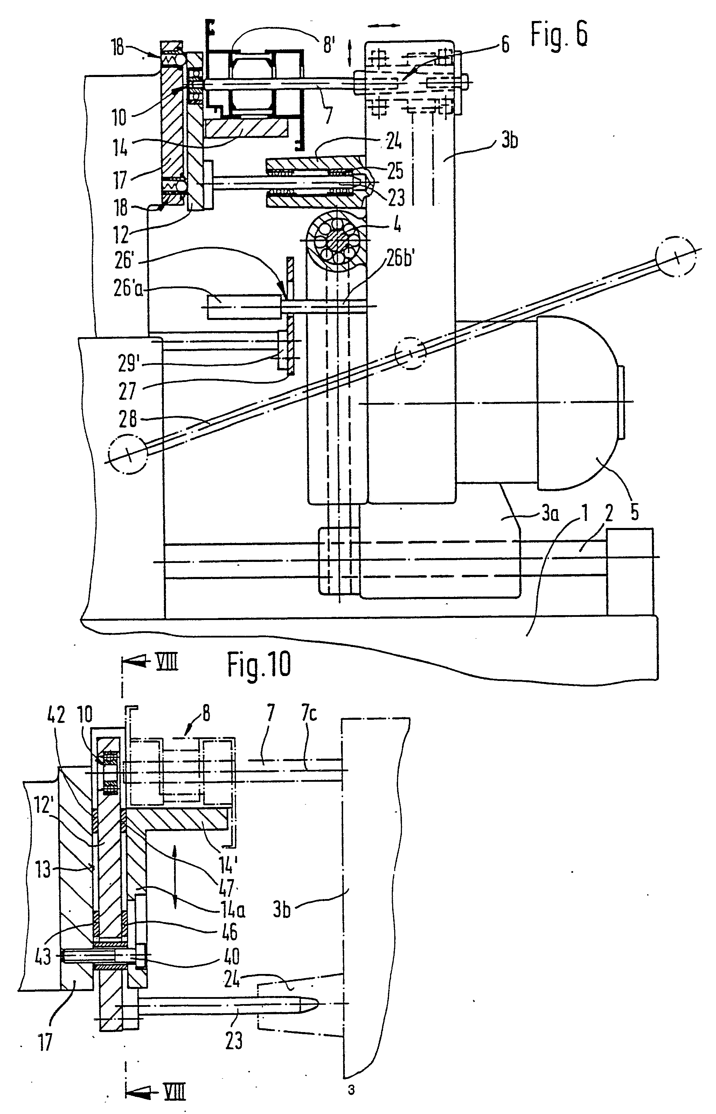

Die in der Fig. 6 gezeigte Fräseinrichtung entspricht im wesentlichen der Fräseinrichtung der Fig. 1. Mit ihr können die gleichen Funktionen und Arbeitsvorgänge ausgeführt werden. Unterschiedlich ist lediglich, daß hier die Büchse 24 und der Mitnahmebolzen 23 nicht unterhalb der Achse der Führungsstange 4, sondern oberhalb dieser an dem Kreuzschlittenteil 3b angeordnet sind. In Fig. 6 wurden daher die gleichen Bezugszeichen wie in Fig. 1 für die Teile verwendet, welche gleich ausgebildet sind oder die gleichen Funktionen ausüben.

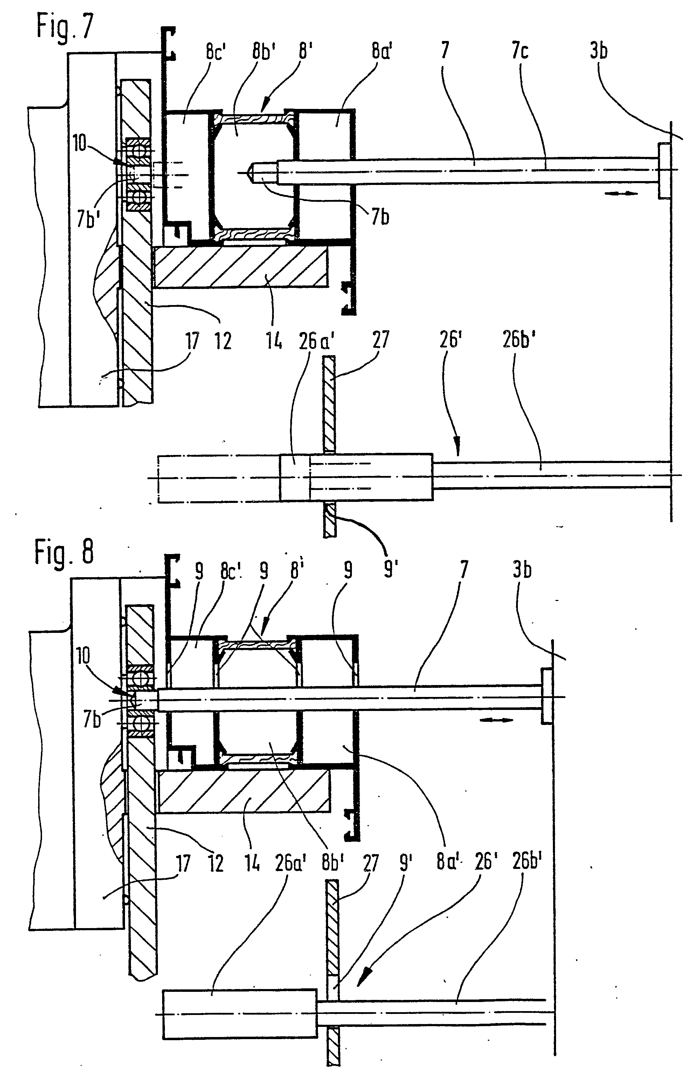

Unterschiedlich zu der Fräseinrichtung der Fig. 1 ist die Art der Halterung der Kopierschablone 27 über die Halterung 29', die aber keine weitere Bedeutung hat. Unterschiedlich vor allem aber ist die Ausbildung des Kopierstiftes 26' selbst, der Bereiche verschiedener Durchmesser aufweist. Dabei ist an seinem freien Ende ein Bereich 26' a mit größerem Durchmesser als jenem des Bereiches 26b' vorgesehen, der, wie noch anhand der Fig. 7 und 8 zu erläutern sein wird, nur während des Fräsvorganges im Bereich der Öffnung 9' der Kopierschablone 27 liegt. Bearbeitet werden soll mit Fräseinrichtung der Fig. 6 ein Hohlprofil 8' mit drei Kammern, das im einzelnen auch in den Fig. 7 und 8 gezeigt ist.

In der Fig. 7 ist die Lage der Fräseinrichtung gezeigt, in der sich das Bohr-Fräswerkzeug 7 erst durch eine der drei Kammern 8a', 8b', 8c' des Hohlprofiles 8' durchgebohrt hat. Fig. 7 zeigt daher den bei der Bearbeitung vorzunehmenden ersten Arbeitsschritt, bei dem an der später auszufräsenden Stelle des Profiles 8' zunächst mit dem Bohr-Fräswerkzeug 7 ein Loch gebohrt wird. Fig. 7 zeigt, daß bei diesem Bohrvorgang der Bereich 26a' des Kopierstiftes 26' innerhalb der Öffnung 9' der Kopierschablone 27 liegt. Das Bohr-Fräswerkzeug 7 wird daher beim Bohrvorgang an einer Stelle des Profiles 8' geführt, die, wenn die Ausfräsung später fertiggestellt ist, in der Mitte dieses auszufräsenden Durchgangs liegt. Der Durchmesser des Bereiches 26b' des Kopierstiftes 26' entspricht — da beim Ausführungsbeispiel 1 : 1 kopiert wird — dem Durchmesser des Bohr-Fräswerkzeuges 7. Umfangsbereiche des Bereiches 26b' kommen während des Bohrvorganges aber nicht mit der Außenkontur der Öffnung 9' in der Kopierschablone 27 in Berührung. Es spielt daher keine Rolle, wenn das Bohr-Fräswerkzeug beim Bohrvorgang, bei dem es nur einseitig gehaltert ist, bedingt durch Schwingungen eine ungenaue Bohrung hinterläßt. Diese zunächst noch ohne Kontrolle durchgeführte Bohrung liegt wegen der Ausbildung des Kopierstiftes 26' immer in einem Bereich, der rundherum von Materialteilen umgeben ist, die beim zweiten Arbeitsschritt, beim Fräsen, herausgefräst werden.

Wenn das Bohr-Fräswerkzeug 7 alle drei Kammern 8a', 8b' und 8c' des Hohlprofiles 8' durchbohrt und die Endlage gemäß Fig. 8 eingenommen hat, wird es beidseitig geführt. Der Fräsvorgang setzt dann ein. Zu diesem Zweck ist die Länge des Abschnittes 26a' so bemessen, daß sich von dem Zeitpunkt an, zudem sich das Ende 7b des Bohr-Fräswerkzeuges 7 im Gegenlager 10 befindet, auch der Bereich 26b' mit dem kleineren und dem dem Bohr-Fräswerkzeug 7 entsprechenden Durchmesser innerhalb der Kopieröffnung 9' der Kopierschablone 27 befindet. Der Fräsvorgang kann dann eingeleitet werden. Auf allen Seiten der vorgebohrten Öffnung kann dann das Material entsprechend dem Kopiervorgang weggefräst werden. Da dieser Fräsvorgang wegen der beidseitigen Führung des Bohr-Fräswerkzeuges 7 sehr genau ist, können auch die Öffnungen 9 sehr genau ausgefräst werden. Bei der neuen Art des Ausfräsens von Türdrückeröffnungen, Schlüssellochdurchbrüchen o. dgl. aus Hohlprofilen, muß daher nur ein einziger kontinuierlich fortgesetzter Arbeitsvorgang durchgeführt werden.

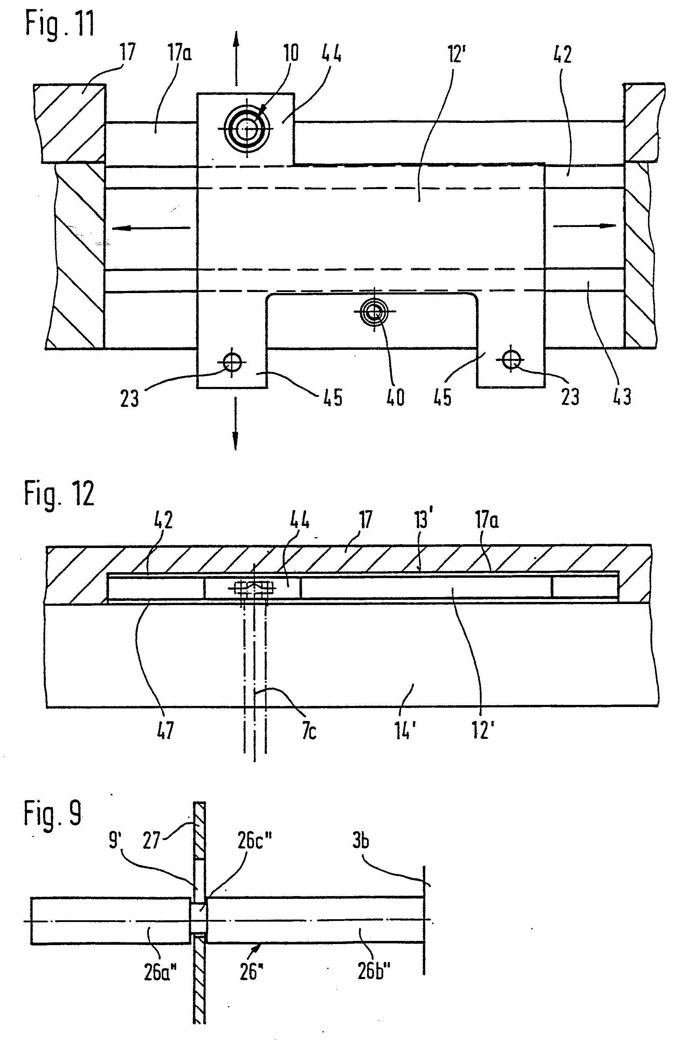

Wie aus Fig. 9 zu erkennen ist, ist es natürlich nicht notwenig, daß der in den Fig. 7 und 8 noch gezeigte Bereich 26b' die dort gezeigte Länge aufweist. Für den Kopier-vorgang, wo keine axiale Verschiebung in Richtung der Achse 7c des Bohr-Fräswerkzeuges mehr vorgenommen wird, genügt es daher auch, den Kopierstift 26″ nur an einer Stelle mit einem Einstich 2c″ zu versehen, der dem Durchmesser des Bohr-Fräswerkzeuges 7 entspricht. Die anderen Bereiche können, weil damit auch die Stabilität des Kopierstiftes 26″ größer wird, auch größeren Durchmesser aufweisen.

In den Fig. 10 bis 12 ist eine gegenüber der Fig. 1 andere Art der Lagerung der Gleitplatte 12 gezeigt, die auf sehr einfache Weise eine sichere und stabile Führung parallel zu der Bezugsfläche 13 gewährleistet, ohne daß aufwendige Wälzlager eingesetzt werden. Wie aus Fig. 10 hervorgeht, ist bei dieser Ausführungsform der Werkstücktisch 14′ als ein Winkelprofil ausgebildet, welches einen rechtwinklig zu der Achse 7c des Bohr-Fräswerkzeuges 7 verlaufenden Schenkel 14a aufweist, der beim Ausführungsbeispiel über Schrauben 40 fest, wegen der Anordnung von Langlöchern aber verstellbar mit der Andrückplatte 17 verschraubt ist. Diese Andrückplatte 17 besitzt, wie den Fig. 11 und 12 zu entnehmen ist, eine Ausnehmung 17a, deren Rückwand senkrecht zu der Achse 7c des Bohr-Fräswerkzeuges 7 verläuft. Diese Rückwand 13′ bildet daher die Bezugsfläche, an der sich eine Gleitplatte 12′ anlegen kann, die hier einen mittleren plattenförmigen Teil zur Anlage an zwei aus gleitfähigem Material bestehende Bahnen 42 und 43 aufweist und eine nach oben abstehende Lasche 44, mit dem Gegenlager 10 und zwei nach unten abstehende Laschen 45 jeweils mit einem Mitnahmebolzen 23 aufweist, der in nicht gezeigter Weise analog den Fig. 1 bis 5 jeweils in eine Büchse 24 am Kreuzschlittenteil 3b eingreift. Die Gleitplatte 12′ wird in ihrer Lage zwischen der Bezugsfläche 13 und dem Schenkel 14a des Werkstücktisches 14′ dadurch gehalten, daß der Abstand zwischen dem Schenkel 14a und der Bezugsfläche 13 so gewählt ist, daß die Gleitplatte 12′ möglichst reibungsarm an den Gleitbahnen 42 und 43 gehalten ist. Der Schenkel 14a des Werkstücktisches 14′ ist zu diesem Zweck ebenfalls mit Gleitbahnen analog den Gleitbahnen 42 und 43 versehen, die in der Fig. 10 mit den Bezugszeichen 46 und 47 versehen sind. In Fig. 12 ist der Schenkel 14a des Werkstücktisches 14′ nicht gezeigt. Er wird durch die Schrauben 40, gegebenenfalls noch durch weitere Schrauben in der in der Fig. 10 dargestellten Lage parallel zu der Bezugsfläche 13 gehalten. Bei dieser Ausführung sind daher Wälzkörper zur Erniedrigung der Gleitreibung der Gleitplatte 12′ nicht nötig.

## Patentansprüche

1. Fräsvorrichtung mit Werkstücktisch (14) und einem Frässupport, der eine Frässpindel mit einem Kopf (6) zur Aufnahme eines Bohr-Fräswerkzeuges (7) aufweist und über ein Kreuzschlittensystem (3) oder dergleichen in einer zur Frässpindelachse rechtwinklig verlaufenden Ebene bewegbar ist, wobei das Kreuzschlittensystem seinerseits — zur Durchführung von Bohrvorgängen — in Richtung der Frässpindelachse verschiebbar ist, insbesondere zur Bearbeitung von Werkstücken wie Fenster- und Türprofile, dadurch gekennzeichnet, daß dem Frässupport ein Führungsteil (12) zugeordnet ist, das an einer bezüglich der Frässpindel jenseits des Werkstücktisches vorgesehenen und rechtwinklig zur Frässpindelachse verlaufenden Bezugsfläche (13) verschiebbar geführt und mit dem Frässupport über eine, eine Axialbewegung zwischen Kreuzschlitten (3) und Führungsteil (12) zulassende Mitnahmeeinrichtung (23) gekoppelt und mit einem Gegenlager (10) versehen ist, in welches das freie Ende des Bohr-Fräswerkzeuges (7) einführbar und dann radial gehalten ist.

2. Fräsvorrichtung nach Anspruch 1, dadurch gekennzeichnet, daß die Mitnahmeeinrichtung als ein Mitnahmebolzen (23) ausgebildet ist, der parallel zur Frässpindelachse verläuft, aber axial beweglich gegenüber dem Kreuzschlitten (3) oder dem Führungsteil (12) ist.

3. Fräsvorrichtung nach den Ansprüchen 1 und 2, dadurch gekennzeichnet, daß das Gegenlager (10) mit einem Wälzlager (11) versehen ist, dessen äußerer Lagerring fest in dem Führungsteil (12) sitzt, und dessen Innenring (11a) im Innendurchmesser dem Durchmesser des Endes (7b) des Bohr-Fräswerkzeuges (7) entspricht.

4. Fräsvorrichtung nach Anspruch 3, dadurch gekennzeichnet, daß das Bohr-Fräswerkzeug (7) an seiner Spitze einen Bereich (7b) mit Umfangsflächen (35, 36) aufweist, die Teile einer in den Innenring (11a) des Wälzlagers (11) des Gegenlagers (10) passenden Zylindermantelfläche sind.

5. Fräsvorrichtung nach den Ansprüchen 1 und 2, dadurch gekennzeichnet, daß der Führungsteil für das Gegenlager (10) eine Gleitplatte (12) ist, die an einer parallel zu der Werkstückanschlagfläche und senkrecht zur Frässpindelachse (7c) verlaufenden Bezugsfläche (13) anliegt, die Teil des Maschinengestells (1) ist.

6. Fräsvorrichtung nach Anspruch 5, dadurch gekennzeichnet, daß die Gleitplatte (12) zu der Bezugsfläche (13) durch eine Führung gehalten ist, die Teil eines mit der Werkstückanschlagfläche versehenen Werkstücktisches ist, der mit einer Aussparung (17a) die Führung bildet.

7. Fräsvorrichtung nach Anspruch 6, dadurch gekennzeichnet, daß die Aussparung (17a) parallel zur Werkstückanschlagfläche verlaufende Führungsbahnen (42, 43) aufweist, die mit gleitfähigem Material belegt oder beschichtet sind.

8. Fräsvorrichtung nach Anspruch 5, dadurch gekennzeichnet, daß die senkrecht zur Frässpindelachse verlaufende Werkstückanschlagfläche getrennt vom Werkstücktisch (14), aber einstückig mit der Bezugsfläche (13) ausgebildet ist, und daß Führungsbahnen (42, 43, 46, 47) für die Gleitplatte (12) sowohl an dem Werkstückanschlag als auch am Werkstücktisch vorgesehen sind.

9. Fräsvorrichtung nach Anspruch 5, dadurch gekennzeichnet, daß die Gleitplatte (17) in Richtung der Oberfläche der Bezugsfläche (13) durch den fest mit ihr verbundenen und senkrecht abragenden Mitnahmebolzen (23) gehalten ist, der axial verschiebbar in eine Führung des Kreuzschlittens (3) eingreift.

10. Fräsvorrichtung nach Anspruch 9, dadurch gekennzeichnet, daß die Führung aus einer mit Wälzlagern (25) ausgestatteten Führungsbüchse (24) am Kreuzschlitten (3) besteht.

11. Fräsvorrichtung nach den Ansprüchen 6 und 9, dadurch gekennzeichnet, daß die Bezugsfläche (13) mit Wälzkörpern (19) zur reibungsarmen Anlage der Gleitplatte (12) versehen ist.

12. Fräsvorrichtung nach Anspruch 11, dadurch gekennzeichnet, daß die Wälzkörper Kugeln (19) sind, die unter Federkraft an Halteringen (21) im Bereich der Bezugsfläche (13) anliegen und mit einem Teil ihrer Oberfläche über die Bezugsfläche (13) hinausragen.

13. Fräsvorrichtung nach einem der Ansprüche 1 bis 12, dadurch gekennzeichnet, daß dem Kreuzschlitten (3) oder dem Führungsteil (12) für das Gegenlager (10) ein Kopierstift (26) zugeordnet ist, der in bekannter Weise zur Durchführung des Fräsvorganges in eine Kopierschablone (27) eintaucht.

14. Fräsvorrichtung nach Anspruch 13, dadurch gekennzeichnet, daß der Kopierstift (26') mit Bereichen (26a, 26b) verschiedener Durchmesser versehen ist, wobei mindestens am freien Ende des Kopierstiftes ein Bereich (26a') größeren Durchmessers vorgesehen ist, dessen Länge so bemessen ist, daß er mit der Kopierschablone (27) in Eingriff bleibt, solange der Durchbohrvorgang vorgenommen wird.

## Claims

1. Milling device comprising a work table (14) and a milling carriage which is provided with a milling spindle and a head (6) for receiving a combined drilling and milling tool (7) and which can be moved, via a cross-slide system (3) or the like, along a plane extending perpendicularly to the axis of the milling spindle, the cross-slide system itself being displaceable in the direction of the axis of the milling spindle, for performing drilling operations, in particular for working workpieces such as window or door sections, characterized in that the milling carriage coacts with a guiding part (12) which is slidably mounted on a reference surface (13) provided on the other side of the work table, relative to the milling spindle, and extending at a right angle relative to the axis of the milling spindle, which is coupled with the milling carriage via entraining means (23) permitting an axial movement between the cross-slide (3) and the guiding part (12), and which is provided with a counter-support (10) for receiving the free end of the combined drilling and milling tool (10) which is then radially held therein.

2. Milling device according to claim 1, characterized in that the entraining means take the form of an entraining pin (23) extending in parallel to the axis of the milling spindle, but being axially movable relative to the cross-slide (3) or the guiding part (12).

3. Milling device according to claims 1 and 2, characterized in that the counter-support (10) is provided with an antifriction bearing (11) whose outer race is fixed to the guiding part (12) while the inner diameter of its inner race (11a) corresponds to the diameter of the end (7b) of the combined drilling and milling tool (7).

4. Milling device according to claim 3, characterized in that the tip of the combined drilling and milling tool (7) comprises an area (7b) with circumferential surfaces (35, 36) which are part of a cylindrical surface fitting into the inner race (11a) of the antifriction bearing (11) of the counter-support (10).

5. Milling device according to claims 1 and 2, characterized in that the guiding part for the counter support (10) is constituted by a sliding plate (12) resting against a reference surface (13) being part of the machine frame (1) and extending in parallel to the stop frame of the workpiece and perpendicularly to the axis of the milling spindle (7c).

6. Milling device according to claim 5, characterized in that the said sliding plate (12) is held relative to the said reference surface (13) by a guide being part of a work table which is provided with the said work-piece stop face and with a recess (17a) forming the said guide.

7. Milling device according to claim 6, characterized in that the said recess (17a) comprises guide tracks (42, 43) extending in parallel to the said workpiece stop face and being lined or coated with a sliding material.

8. Milling device according to claim 5, characterized in that the said workpiece stop face, which extends perpendicularly to the axis of the milling spindle, forms a part separate from the said work table (14) but formed integrally with the said reference surface (13) and that guide tracks (42, 43, 46, 47) for the said sliding plate (12) are provided on both, the said workpiece stop face and the said work table.

9. Milling device according to claim 5, characterized in that the said sliding plate (17) is retained in the direction of the surface of the said reference face (13) by means of the said retaining pin (23) which is fixed thereto and projects therefrom vertically for engaging a guide of the said cross-slide (3) in axially displaceable relationship.

10. Milling device according to claim 9, characterized in that the said guide consists of a guide bushing (24) provided on the said cross-slide (3) and equipped with antifriction bearings (25).

11. Milling device according to claims 6 and 9, characterized in that the said reference surface (13) is provided with rolling bodies (19) to ensure lowfriction contact with the said sliding plate (12).

12. Milling device according to claim 11, characterized in that the said rolling bodies are balls (19) which are retained in contact by spring action with holding rings (21), with part of their surface projecting beyond the said reference

surface (13).

13. Milling device according to any of claims 1 to 12, characterized in that the said cross-slide (3) or the said guiding part (12) for the said counter-support (10) coacts with a copying pencil (26) which engages a copying template (27) for carrying out the milling operation in the conventional manner.

14. Milling device according to claim 13, characterized in that the said copying pencil (16') is provided with areas (26a, 26b) of different diameters, and that an area (26a') of larger diameter is provided at least at the free end of the said copying pencil, whose length is selected to ensure safe engagement with the said copying template (27) during the piercing operation.

## Revendications

1. Dispositif de fraisage avec un support pour pièce à usiner (14) et un support de fraisage présentant une broche de fraisage avec un mandrin (6) pour recevoir un outil de perçage et de fraisage (7) et mobile par l'intermédiaire d'un système de coulisseau en croix (3) ou analogue dans un plan s'étendant perpendiculairement à l'axe de la broche de fraisage, le système de coulisseau en croix étant lui-même mobile — pour l'exécution du processus de perçage — en direction de l'axe de la broche de fraisage, notamment pour l'usinage de pièces telles que des profilés de fenêtres ou de portes, caractérisé en ce qu'une pièce de guidage (12) est adjointe au support de fraisage, laquelle est guidée de manière mobile sur une surface de référence (13) s'étendant perpendiculairement à l'axe de la broche de fraisage, au-delà du support pour la pièce à usiner par rapport à la broche, couplée avec le support de fraisage par l'intermédiaire d'une installation d'entraînement (23) permettant un mouvement axial entre le coulisseau en croix (3) et la pièce de guidage (12) et pourvue d'un contrepalier (10) dans lequel l'extrémité libre de l'outil de perçage et de fraisage (7) peut être introduite puis maintenue de manière radiale.

2. Dispositif de fraisage selon la revendication 1, caractérisé en ce que l'installation d'entraînement est agencée sous forme d'un goujon d'entraînement (23) s'étendant parallèlement à l'axe de la broche de fraisage mais pouvant être déplacé de manière axiale par rapport au coulisseau en croix (3) ou à la pièce de guidage (12).

3. Dispositif de fraisage selon les revendications 1 et 2, caractérisé en ce que le contrepalier (10) est pourvu d'un palier de roulement dont la bague extérieure est fixée dans la pièce de guidage (12), le diamètre intérieur de la bague intérieure (11a) correspondant dans son diamètre intérieur au diamètre de l'extrêmité (7b) de l'outil de perçage et de fraisage.

4. Dispositif de fraisage selon la revendication 3, caractérisé en ce que l'outil de perçage et de fraisage présente à sa pointe une zone (7b) avec des surfaces périphériques (35, 36) qui sont secteurs d'une surface extérieure de cylindre s'adaptant dans la bague intérieure (11a) du palier de roulement (11) du contrepalier (10).

5. Dispositif de fraisage selon les revendications 1 et 2, caractérisé en ce que la pièce de guidage pour le contrepalier (10) est une plaque de glissement (12) qui repose contre une surface de référence (13), faisant partie du bâti (1) de la machine, s'étendant parallèlement à la surface de butée de la pièce à usiner et perpendiculairement à l'axe de la broche de fraisage (7c).

6. Dispositif de fraisage selon la revendication 5, caractérisé en ce que la plaque de glissement (12) est maintenue contre la surface de référence (13) par un guidage qui est partie d'un support pour la pièce à usiner pourvu d'une surface de butée de ladite pièce lequel présente un évidement (17a) formant le guidage.

7. Dispositif de fraisage selon la revendication 6, caractérisé en ce que l'évidement (17a) présente des glissières (42, 43) s'étendant parallèlement à la surface de butée de la pièce à usiner et revêtues d'un matériau permettant le glissement.

8. Dispositif de fraisage selon la revendication 5, caractérisé en ce que la surface de butée de la pièce à usiner s'étendant perpendiculairement à l'axe de la broche de fraisage est indépendante du support pour la pièce à usiner (14) mais solidaire de la surface de référence (13) et que des glissières (42, 43, 46, 47) pour la plaque de glissement (12) sont prévues aussi bien sur la butée que sur le support pour la pièce à usiner.

9. Dispositif de fraisage selon la revendication 5, caractérisé en ce que la plaque de glissement (12) est maintenue en direction de la surface de référence (13) par le goujon d'entraînement (23) faisant saillie sur ladite plaque et lui étant relié de manière fixe, lequel intervient d'une manière mobile dans le sens axial dans une glissière du coulisseau en croix.

10. Dispositif de fraisage selon la revendication 9, caractérisé en ce que le guidage consiste en un logement (24) disposé sur le coulisseau en croix, pourvu de paliers de roulement.

11. Dispositif de fraisage selon les revendications 6 et 9, caractérisé en ce que la surface de référence (13) est pourvue d'éléments de roulement (19) pour un maintien à frottement minime de la plaque de glissement (12).

12. Dispositif de fraisage selon la revendication 11, caractérisé en ce que les éléments de roulement sont des billes (19) lesquelles viennent s'ajuster d'une manière élastique à des bagues support dans la zone de la surface de référence (13) et dont une partie de la surface dépasse de la surface de référence.

13. Dispositif de fraisage selon l'une des revendications 1 à 12, caractérisé en ce qu'un doigt (26), plongeant d'une manière connue dans un gabarit (27) pour l'exécution du processus de fraisage, est adjoint au coulisseau en croix (3) où à la pièce de guidage (12) pour le contrepalier (10).

14. Dispositif de fraisage selon la revendication 13, caractérisé en ce que le doigt (26') est pourvu de zones (26a, 26b) de diamètres différents, au moins une zone (26a') de diamètre plus important étant prévue à l'extrêmité libre du doigt, zone dont la longueur est calculée de telle manière qu'il reste en position de retenue pendant toute la durée du processus de perçage.

0 160 217

Fig. 1

Fig. 2

Fig. 3    Fig. 4

Fig. 5

**0 160 217**

Fig. 6

Fig. 10

**0 160 217**

Fig. 7

Fig. 8

4

**0 160 217**

Fig. 11

Fig. 12

Fig. 9

5